# EUROPEAN PATENT APPLICATION

(11) **EP 4 826 979 A1**
(43) Date of publication of application: **21.10.2026**
(21) Application number: 25216552.7
(22) Date of filing: 18.11.2025
(51) Int. Cl.: H02M 3/158, H02M 3/139

(54) **CONTROL CIRCUIT AND CONTROL METHOD FOR BUCK-BOOST CONVERTER, AND AIRBAG CHIP**

(30) Priority: 14.04.2025 CN 202510461959
(71) Applicant: SUZHOU C*Core Technology Co., Ltd., Suzhou, Jiangsu 215011 (CN)
(72) Inventor: XIAO, Zuonan, Suzhou, Jiangsu 215011 (CN); CHANG, Yaning, Suzhou, Jiangsu 215011 (CN); XU, Liangao, Suzhou, Jiangsu 215011 (CN); XU, Xiuqiang, Suzhou, Jiangsu 215011 (CN); ZHENG, Jiang, Suzhou, Jiangsu 215011 (CN); KUANG, Qihe, Suzhou, Jiangsu 215011 (CN)
(74) Representative: Winter, Brandl - Partnerschaft mbB

(57) **Abstract**

The present application relates to a control circuit and control method for a BUCK-BOOST converter, and an airbag chip. A peak value of an inductor current is detected through a current sampling compensation module to achieve stable control of the output voltage. Its dynamic response speed is fast, the loop stability is good, and the circuit structure is simple. The smooth switching of the operating mode of the BUCK-BOOST converter is achieved by a mode control module, ensuring that the BUCK-BOOST converter can still operate normally under a high voltage class. Furthermore, a slope compensation unit is introduced into the circuit, thereby effectively preventing subharmonic oscillation when the duty cycle of a PWM signal is greater than 50%, and ensuring the stability of the system.

## Description

### TECHNICAL FIELD

The present application relates to the technical field of converter control, in particular to a control circuit and control method for a BUCK-BOOST converter, and an airbag chip.

### BACKGROUND

As a direct current-direct current (DC-DC) converter, BUCK-BOOST combines functions of both Buck (step-down) and Boost (step-up) converters, and can increase or decrease the voltage in the same circuit. Therefore, BUCK-BOOST is widely applied to an airbag system of a vehicle.

As the degree of automotive electrification continues to increase, the traditional 12V automotive electrical system has difficulty in meeting the demands of modern automobiles for higher power, higher efficiency, and more complex electrical loads. This has led to the emergence of 48V automotive electrical system, which, by increasing the voltage class, can achieve greater power output, higher system efficiency, and lower production costs. As the voltage class increases, the BUCK-BOOST module applied to the airbag of this system also faces new challenges, it not only requires a larger input voltage range, but also requires to respond quickly to load changes, so as to ensure the stability of the output voltage.

### SUMMARY

Based on this, it is necessary to address the above technical problems by providing a control circuit and control method for a BUCK-BOOST converter and an airbag chip that can smoothly switch an operating mode.

In a first aspect, the present application provides a control circuit for a BUCK-BOOST converter, including:
a voltage divider module configured to perform voltage division processing on an output voltage of the BUCK-BOOST converter to obtain a divided voltage;
an error amplifier configured to compare the divided voltage with a reference voltage and then amplify the difference between the divided voltage with the reference voltage to obtain a voltage error signal;
a current sampling compensation module configured to acquire an inductor current sampling signal of the BUCK-BOOST converter and perform slope compensation on the inductor current sampling signal to obtain a compensation signal;
a first comparator configured to compare the compensation signal with the voltage error signal, and generate a control signal in a case that the compensation signal is determined to match the voltage error signal; and
a mode control module configured to control on-off states of a first switch and a second switch in the BUCK-BOOST converter through the control signal to control an operating mode of the BUCK-BOOST converter.

In one of the embodiments, the mode control module includes:
a first trigger configured to output a first driving signal according to a first clock signal and a logical processing result of the control signal and a current-limiting output signal;
a logic unit configured to perform logical processing on the first driving signal and output a second driving signal;
a first driving unit configured to generate a first control signal for the first switch according to the second driving signal to control the on-off states of the first switch; and
a mode switching unit configured to determine a corresponding output state by determining whether a high level of the first driving signal overlaps a high level of a second clock signal, and generate a second control signal for the second switch according to the output state to control the on-off states of the second switch.

In one of the embodiments, the mode switching unit includes:
a comparator unit configured to compare an input voltage of the BUCK-BOOST converter with the reference voltage to obtain a comparison result;
a second trigger configured to determine the output state according to the comparison result, the first driving signal and the second clock signal; and
a second driving unit configured to generate the second control signal for the second switch according to the first driving signal and the output state.

In one of the embodiments, the comparator unit includes:
a voltage divider sub-circuit configured to perform voltage division processing on the input voltage of the BUCK-BOOST converter to obtain a first divided input voltage and a second divided input voltage;
a second comparator configured to compare the first divided input voltage with the reference voltage to obtain a first comparison result; and
a third comparator configured to compare the second divided input voltage with the reference voltage to obtain a second comparison result.

In one of the embodiments, the mode control module is further configured to:
when the input voltage of the BUCK-BOOST converter is greater than the output voltage multiplied by a first set multiple, control the first switch to turn on to charge an inductor of the BUCK-BOOST converter to increase the compensation signal; when the compensation signal is equal to the voltage error signal, generate a high-level pulse by the control signal to control the first switch to turn off until the first switch is turned on again in the next clock period; and control the second switch to turn off, such that the BUCK-BOOST converter operates in a buck mode; and
when the input voltage of the BUCK-BOOST converter is less than the output voltage multiplied by a second set multiple, control the second switch to turn off based on the first driving signal, such that the BUCK-BOOST converter operates in a boost mode.

In one of the embodiments, the mode control module is further configured to:
when the input voltage of the BUCK-BOOST converter is less than or equal to the output voltage multiplied by the first set multiple and greater than or equal to the output voltage multiplied by the second set multiple, control the first switch to turn on and control the second switch to turn off at an initial moment, such that the BUCK-BOOST converter operates in the buck mode;
at a moment when the high level of the first driving signal overlaps with the high level of the second clock signal, control the second switch to turn on, such that the BUCK-BOOST converter operates in the boost mode; and
when the control signal generates a high-level pulse, control the first switch to turn off and control the second switch to turn off until the first and second switches are turned on again in the next clock period, thereby realizing a bidirectional buck-boost mode of the BUCK-BOOST converter.

In one of the embodiments, a period of the second clock signal is the same as a period of the first clock signal, and the high level of the second clock signal is delayed relative to a high level of the first clock signal.

In a second aspect, the present application also provides a control method for a BUCK-BOOST converter, and the method includes:
performing voltage division processing on an output voltage of the BUCK-BOOST converter to obtain a divided voltage;
comparing the divided voltage with a reference voltage and then amplifying the difference between the divided voltage with the reference voltage to obtain a voltage error signal;
acquiring an inductor current sampling signal of the BUCK-BOOST converter and performing slope compensation on the inductor current sampling signal to obtain a compensation signal;
comparing the compensation signal with the voltage error signal, and generating a control signal in a case that the compensation signal is determined to match the voltage error signal; and
controlling on-off states of a first switch and a second switch in the BUCK-BOOST converter through the control signal to control an operating mode of the BUCK-BOOST converter.

In one of the embodiments, the controlling on-off states of a first switch and a second switch in the BUCK-BOOST converter through the control signal to control an operating mode of the BUCK-BOOST converter includes:
obtaining a first driving signal according to a first clock signal and a logical processing result of the control signal and a current-limiting output signal;
performing logical processing on the first driving signal to obtain a second driving signal, and generating a first control signal for the first switch according to the second driving signal; and
determining a corresponding output state by determining whether the high level of the first driving signal overlaps the high level of the second clock signal, and generating a second control signal for the second switch according to the output state to control the operating mode of the BUCK-BOOST converter.

In a third aspect, the present application also provides an airbag chip, and the chip includes the control circuit for the BUCK-BOOST converter described in the above first aspect.

According to the above control circuit and control method for the BUCK-BOOST converter, and the airbag chip, a peak value of the inductor current is detected through the current sampling compensation module to achieve stable control of the output voltage. Its dynamic response speed is fast, the loop stability is good, and the circuit structure is simple. The smooth switching of the operating mode of the BUCK-BOOST converter is achieved by the mode control module, ensuring that the BUCK-BOOST converter can still operate normally under the high voltage class. Furthermore, the slope compensation unit is introduced into the circuit, thereby effectively preventing sub-harmonic oscillation when the duty cycle of a PWM signal is greater than 50%, and ensuring the stability of the system.

### BRIEF DESCRIPTION OF THE DRAWINGS

In order to more clearly illustrate the technical solutions in the embodiments of the present application or in the related technologies, the drawings that need to be used in the description of the embodiments of the present application or the related technologies will be introduced briefly below. Obviously, the drawings described below are only some embodiments of the present application. For those skilled in the art, other related drawings can also be obtained according to these drawings without any creative effort.
Fig. 1 is a schematic diagram of the circuit structure of an asynchronous four-switch BUCK-BOOST in an embodiment;
Fig. 2 is a schematic diagram of a control circuit for a BUCK-BOOST converter in an embodiment;
Fig. 3 is a schematic diagram of the internal structure of the mode control module in an embodiment;
Fig. 4 is a schematic diagram of waveforms under different operating modes in an embodiment;
Fig. 5 is a flow diagram of a control method for a BUCK-BOOST converter in an embodiment.

### DETAILED DESCRIPTION

In order to make the purpose, technical solutions and advantages of the present application clearer, the present application will be described in detail below with reference to the drawings and embodiments. It should be understood that the specific embodiments described herein are only used to explain the present application and are not intended to limit the present application.

Since the battery voltage of the 48V automotive electrical system is higher than the battery voltage of the 12V automotive electrical system, the BUCK-BOOST module needs to have a larger input voltage range. At the same time, the load of the 48V automotive electrical system changes relatively quickly, requiring the BUCK-BOOST circuit to respond quickly to load changes and ensure the stability of the output voltage.

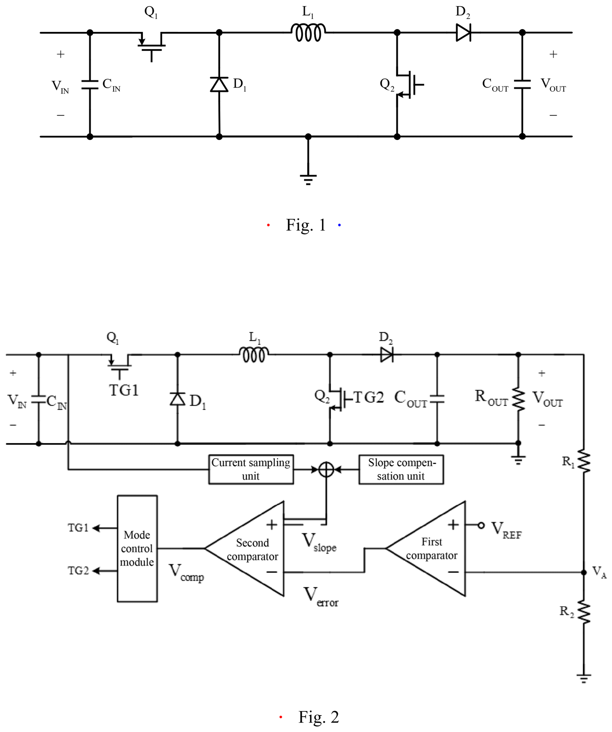

Fig. 1 shows a circuit structure of an asynchronous four-switch BUCK-BOOST. This circuit includes two switching transistors (*Q*₁ and *Q*₂), two diodes (*D*₁ and *D*₂), an inductor (*L*₁), and input and output capacitors (*C_{IN}* and *C_{OUT}*). The mode conversion among BUCK (step-down), BOOST (step-up), and BUCK-BOOST (bidirectional step-up/step-down) is performed by controlling the on-off states of the switching transistors *Q*₁ and *Q*₂ , so as to achieve the step-up and step-down functions.

According to different loop architectures, the control mode of the asynchronous four-switch BUCK-BOOST is generally divided into two types: a voltage mode and a current mode. In the voltage mode control, the output voltage *V_{OUT}* is detected and compared with the reference voltage, to generate an error signal for adjusting the duty cycle of the switching transistor, and ensure the stability of the output voltage. However, this mode is insensitive to the change of the input voltage *V_{IN}* and has a poor dynamic response. An average current mode is generally adopted in the common current mode control, in which the stable control of the output voltage *V_{OUT}* is achieved by adjusting the average value of the inductor current. However, its circuit structure is complex and has high requirements for the precision of current detection, so it is usually suitable for fields such as high-precision power supplies, battery chargers, and LED drivers.

Based on this, an embodiment of the present application provides a control circuit for a BUCK-BOOST converter, which is configured to control the operating mode of the BUCK-BOOST converter based on the peak current mode. As shown in Fig. 2, the control circuit includes a voltage divider module, an error amplifier, a current sampling compensation module, a first comparator, and a mode control module.

The voltage divider module is configured to perform voltage division processing on an output voltage of the BUCK-BOOST converter to obtain a divided voltage. Specifically, the voltage divider module is implemented by a resistor divider network composed of resistors *R*₁ and *R*₂. The voltage division processing is performed on the output voltage *V_{OUT}* of the BUCK-BOOST converter through the voltage divider module to obtain the divided voltage *V_{A}.*

The error amplifier is configured to compare the divided voltage *V_{A}* with the reference voltage *V_{REF}* and then amplify the difference between the divided voltage *V_{A}* with the reference voltage *V_{REF}* to obtain a voltage error signal *Vₑᵣᵣₒᵣ.*

The current sampling compensation module is configured to acquire an inductor current sampling signal of the BUCK-BOOST converter and perform slope compensation on the inductor current sampling signal to obtain a compensation signal *Vₛₗₒₚₑ.* Specifically, the current sampling compensation module can be implemented by a current sampling unit and a slope compensation unit. The current sampling unit samples the inductor current of the BUCK-BOOST converter, and adds the sampled value to the slope compensation value of the slope compensation unit to obtain the compensation signal *Vₛₗₒₚₑ.* The inductor current sampling signal can be a current signal sampled from the inductor.

The first comparator is configured to compare the compensation signal *Vₛₗₒₚₑ* with the voltage error signal *Vₑᵣᵣₒᵣ,* and generate a control signal *V_{comp}* in a case that the compensation signal *Vₛₗₒₚₑ* is determined to match the voltage error signal *Vₑᵣᵣₒᵣ.* The "match" can refer to the case in which the two signals are equal. For example, when the compensation signal *Vₛₗₒₚₑ* is determined to be equal to the voltage error signal *Vₑᵣᵣₒᵣ,* the first comparator outputs a control signal *V_{comp}* of high level.

The mode control module is configured to control on-off states of the first switch *Q*₁ and the second switch *Q*₂ in the BUCK-BOOST converter through the control signal *V_{comp}* to control the operating mode of the BUCK-BOOST converter. Specifically, the control signal *V_{comp}* is input into the mode control module, and is processed by the mode control module to generate a PWM signal. By adjusting the duty cycle of the PWM signal, the on-off states of the first switch *Q*₁ and the second switch *Q*₂ are controlled to achieve the smooth switching of the operating mode of the BUCK-BOOST converter and stabilize the output voltage.

According to the above control circuit for the BUCK-BOOST converter, the operating mode of the BUCK-BOOST converter is controlled based on a peak current mode, a peak value of an inductor current is detected through the current sampling compensation module to achieve stable control of the output voltage. Its dynamic response speed is fast, the loop stability is good, and the circuit structure is simple. The smooth switching of the operating mode of the BUCK-BOOST converter is achieved by the mode control module, ensuring that the BUCK-BOOST converter can still operate normally under a high voltage class. Moreover, the slope compensation unit is introduced into the circuit, thereby effectively preventing sub-harmonic oscillation when the duty cycle of the PWM signal is greater than 50%, and ensuring the stability of the system.

In an exemplary embodiment, the above mode control module may specifically include a first trigger, a logic unit, a first driving unit, and a mode switching unit.

The first trigger is configured to output a first driving signal according to a first clock signal and a logical processing result of the control signal and a current-limiting output signal. The current-limiting output signal is a signal for determining whether the current of the BUCK-BOOST converter exceeds a threshold. For a normal operating state, the current-limiting output signal is 0, that is, the current of the BUCK-BOOST converter does not exceed the threshold. The logical processing result can be a result of a logical operation on the control signal and the current-limiting output signal.

The logic unit is configured to perform logical processing on the first driving signal and output a second driving signal.

The first driving unit is configured to generate a first control signal for the first switch according to the second driving signal to control the on-off states of the first switch.

The mode switching unit is configured to determine a corresponding output state by determining whether a high level of the first drive signal overlaps with a high level of a second clock signal, and generate a second control signal for the second switch according to the output state to control the on-off states of the second switch. The period of the second clock signal is the same as the period of the first clock signal, and the high level of the second clock signal is delayed relative to the high level of the first clock signal. For example, if the period is *T_{S},* there is a delay of 0.8 ×*T_{S}* between the high level of the second clock signal and the high level of the first clock signal.

In an exemplary embodiment, the above mode switching unit may specifically include a comparator unit, a second trigger, and a second driving unit.

The comparator unit is configured to compare an input voltage of the BUCK-BOOST converter with the reference voltage to obtain a comparison result. The comparator unit may specifically include: a voltage divider sub-circuit configured to perform voltage division processing on the input voltage of the BUCK-BOOST converter to obtain a first divided input voltage and a second divided input voltage; a second comparator configured to compare the first divided input voltage with the reference voltage to obtain a first comparison result; and a third comparator configured to compare the second divided input voltage with the reference voltage to obtain a second comparison result.

The second trigger is configured to determine an output state according to the comparison result, the first driving signal and the second clock signal.

The second driving unit is configured to generate a second control signal for the second switch according to the first driving signal and the output state.

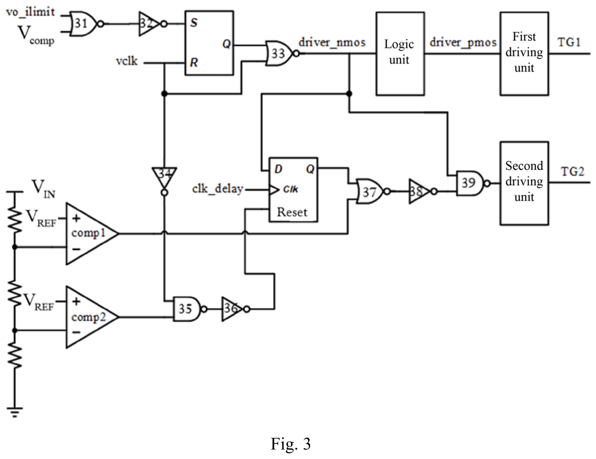

In an exemplary embodiment, the structure of the above mode control module may be in the form shown in Fig. 3. The mode control principle of the mode control module will be further explained below in conjunction with Fig. 3. The above first trigger is an RS trigger in Fig. 3, the second trigger is a D trigger in Fig. 3, the second comparator is comp1 in Fig. 3, and the third comparator is comp2 in Fig. 3.

Specifically, the control signal *V_{comp}* output by the first comparator and the current-limiting output signal vo_ilimit are connected to two input terminals of a first NOR gate 31. When the signal vo_ilimit is at low level, the output signal of the NOR gate 31 is inverted relative to the signal *V_{comp}* . The output signal of the NOR gate 31 is then connected to a S terminal of an RS trigger via an inverter 32, and a R terminal of the RS trigger is connected to the first clock signal vclk. When the compensation signal *Vₛₗₒₚₑ* is equal to the voltage error signal *Vₑᵣᵣₒᵣ,* the signal *V_{comp}* generates a pulse, and the output state of the RS trigger changes from low level to high level until it is reset to low level again in the next clock period. The output terminal of the RS trigger and the signal vclk are connected to an input terminal of the second NOR gate 33. When both signals are at low level, the output signal is at high level; when one of the signals becomes high level, the output signal is at low level. The output signal of the NOR gate 33 is the first driving signal driver_nmos. This signal is processed by the logic unit to output the second driving signal driver_pmos. After the signal driver_pmos processed by the first driving unit, the first control signal TG1 for the first switch *Q*₁ is generated.

The signal driver_nmos is connected to an input terminal of the D trigger. The signal clk_delay is a clock signal of the D trigger, that is, the second clock signal. The period of this second clock signal is the same as the period of the first clock signal vclk, but its high level has a delay of *0.8 XTₛ,* where *Tₛ* is the period of the clock signal. Further, by determining whether the high level of the first drive signal driver_nmos overlaps with the high level of the second clock signal clk_delay, the output state of the D trigger is changed, so as to control the on-off states of the second switch *Q*₂ to change the operating mode of the circuit. Meanwhile, the output voltage *V_{IN}* of the BUCK-BOOST converter is processed by the voltage divider sub-circuit and is compared with the reference voltage *V_{REF}.* The second comparison result output by the third comparator comp2 and the first clock signal inverted by the inverter 34 are processed by the logic gates (including the NAND gate 35 and the inverter 36 connected in sequence) and then connected to a Reset terminal of the D trigger. The first comparison result output by the second comparator comp1 and the output signal of the D trigger are connected to the input terminal of a third NOR gate 37. After being inverted by the inverter 38, the processed signal is connected to the NAND gate 39 together with the first drive signal driver_nmos. The output signal of the NAND gate 39 is processed by the second driving unit to generate a second control signal TG2 for the second switch.

In the above embodiments, through the D trigger and the comparator unit in the mode control module, by determining whether the high level of the signal driver_nmos overlaps with the high level of the signal clk_delay and comparing the signal *V_{IN}* with the signal *V_{REF},* the on-off states of the switching transistors *Q*₁ and *Q*₂ are controlled to change the operating mode of the circuit, ensure the stability of the output voltage of the BUCK-BOOST circuit, and realize the seamless switching during the conversion of the operating mode of the BUCK-BOOST circuit. Moreover, the circuit structure is simple, the control logic is concise, the production cost is low, and the system reliability is high.

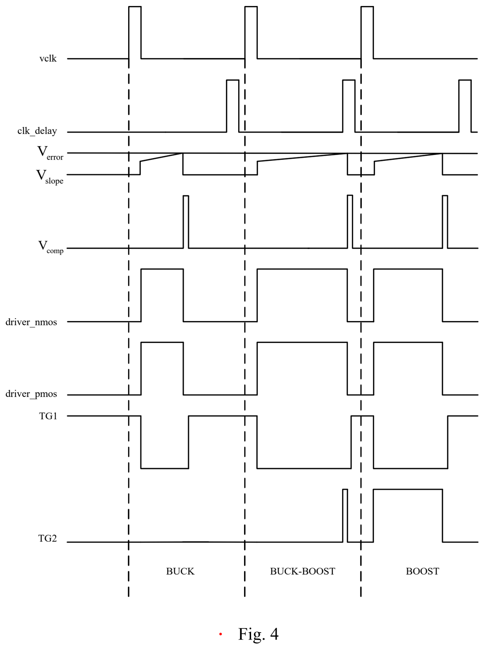

Specifically, the waveforms of the circuit shown in Fig. 3 under different operating modes are as shown in Fig. 4. Then, its corresponding operating process may include:
When V_{IN}>>V_{OUT} (that is, the input voltage V_{IN} of the BUCK-BOOST converter is greater than the output voltage *V_{OUT}* multiplied by a first set multiple, where the first set multiple can be 1.1 or more, preferably 1.17), the circuit operates in a BUCK mode, the switching transistor *Q*₁ is turned on to charge the inductor *L*₁ in the BUCK-BOOST converter, and thus the signal *Vₛₗₒₚₑ* increases. When the signal *Vₛₗₒₚₑ* is equal to the signal *Vₑᵣᵣₒᵣ,* the signal *V_{comp}* generates a pulse. At this time, the signals driver_nmos and driver_pmos change from high level to low level. TG1 changes from low level to high level at a falling edge of the pulse signal to control the first switch *Q*₁ to turn off until it is turned on again in the next clock period. Meanwhile, the signal V_{IN} is processed by the voltage divider circuit and compared with the signal *V_{REF}.* Comp1 outputs a low level, and comp2 outputs a high level. The output signal of comp2 and the inverted signal vclk are processed by the logic gates and then connected to the Reset terminal of the D trigger. At this time, the high-level duration of the signal driver_nmos does not overlap with the high-level duration of the signal clk_delay, and the output state of the D trigger remains unchanged and stays low level. The output signal of the D trigger and the output signal of comp1 are both connected to the input terminal of the third NOR gate 37, and the NOR gate outputs a high level. After the high-level signal is inverted, it is connected to the input terminal of the NAND gate 39 together with the signal driver_nmos. Since one input signal of the NAND gate 39 is at a low level, the output signal of the NAND gate 39 is at a high level. This signal is input to the second driving unit to generate the control signal TG2 of the switching transistor *Q*₂, and the control signal TG2 is at a low level. Therefore, the switching transistor *Q*₂ is turned off.

When V_{lN}≈V_{OUT} (that is, *V*_{IN} is less than or equal to the output voltage *V_{OUT}* multiplied by a first set multiple and greater than or equal to the output voltage *V_{OUT}* multiplied by a second set multiple, where the second set multiple can be a number around 0.85, close to 1, and less than the first set multiple, preferably, 0.83), the circuit operates in the BUCK-BOOST mode. Initially, the circuit operates in the BUCK mode, the switching transistor *Q*₁ is turned on, and *Q*₂ is turned off. When the high-level duration of the signal driver_nmos partially overlaps with the high-level duration of the signal clk_delay, the output state of the D trigger changes from low level to high level at the moment when the high levels overlap. This signal and the low level output by comp1 are processed by the logic gates to output a signal in the same phase with the signal *Q.* This signal and the signal driver_nmos are both connected to the input terminals of the NAND gate 39. When both signals are at a high level, the NAND gate 39 outputs a low level, the signal TG2 generated after the signal output by the NAND gate 39 is processed by the second driving unit becomes high level to control the switching transistor *Q*₂ to turn on, and thus the circuit starts to operate in the BOOST mode. When the signal *V_{comp}* generates a pulse, the signals driver_nmos and driver_pmos change from high level to low level, TG1 changes from low level to high level, and the switching transistor *Q*₁ is turned off; TG2 changes from high level to low level, and the switching transistor *Q*₂ is turned off until it is turned on again in the next clock period.

When V_{lN}<<V_{OUT} (that is, V_{IN} is less than the output voltage *V_{OUT}* multiplied by the second set multiple), the circuit operates in the BOOST mode. At this time, the signal *V*_{IN} is processed by the voltage divider circuit and is compared with the signal *V_{REF}.* Both comp1 and comp2 output high levels. Since the high-level duration of the signal driver_nmos does not overlap with the high-level duration of the signal clk_delay, the output state of the D trigger remains unchanged and stays low level. This signal and the output signal of comp1 are processed by the logic gates to generate a high level, which is then connected to the input terminal of the NAND gate 39 together with the signal driver_nmos, and then the control signal TG2 of the switching transistor *Q*₂ is generated through the second driving unit. At this time, TG2 changes following the change of the signal driver_nmos. When the signal *V_{comp}* generates a pulse, TG1 changes from low level to high level, and the switching transistor *Q*₂ is turned off; TG2 changes from high level to low level, and the switching transistor *Q*₂ is turned off until it is turned on again in the next clock period. Therefore, seamless switching during the operating mode conversion of the BUCK-BOOST converter is achieved.

All or part of each of the modules in the control circuit for the above BUCK-BOOST converter can be implemented by software, hardware, or a combination thereof. Each of the above modules can be embedded in or independent of the processor of the computer device in hardware form, or can be stored in the memory of the computer device in software form, such that the processor can call and execute the operations corresponding to each of the above modules.

Based on the same inventive concept, embodiments of the present application also provide a control method for implementing the above control circuit for the BUCK-BOOST converter. The implementation solution provided by this method to solve the problem is similar to the implementation solution described in the above control circuit. Therefore, for the specific limitations in one or more embodiments of the control method for the BUCK-BOOST converter provided below, reference can be made to the limitations on the control circuit for the BUCK-BOOST converter in the above text, and details are not repeated herein.

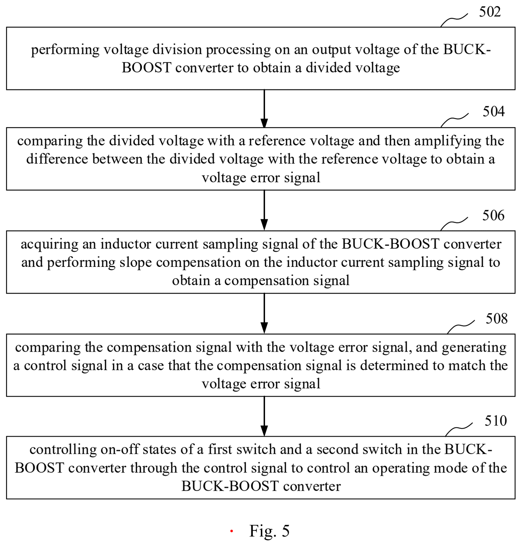

In one embodiment, as shown in Fig. 5, the present application also provides a control method for a BUCK-BOOST converter. Taking the method being applied to the control circuit in Fig. 2 or Fig. 3 as an example for illustration, the method may specifically include the following steps:
step 502: performing voltage division processing on an output voltage of the BUCK-BOOST converter to obtain a divided voltage;
step 504: comparing the divided voltage with a reference voltage and then amplifying the difference between the divided voltage and the reference voltage to obtain a voltage error signal;
step 506: obtaining an inductor current sampling signal of the BUCK-BOOST converter and performing slope compensation on the inductor current sampling signal to obtain a compensation signal;
step 508: comparing the compensation signal with the voltage error signal, and generating a control signal in a case that the compensation signal is determined to match the voltage error signal; and
step 510: controlling on-off states of a first switch and a second switch in the BUCK-BOOST converter through the control signal to control an operating mode of the BUCK-BOOST converter.

In an exemplary embodiment, the controlling on-off states of a first switch and a second switch in the BUCK-BOOST converter through the control signal to control an operating mode of the BUCK-BOOST converter includes: obtaining a first driving signal according to a first clock signal and a logical processing result of the control signal and a current-limiting output signal; performing logical processing on the first driving signal to obtain a second driving signal, and generating a first control signal for the first switch according to the second driving signal; and determining a corresponding output state by determining whether the high level of the first driving signal overlaps with the high level of the second clock signal, and generating a second control signal for the second switch according to the output state to control the operating mode of the BUCK-BOOST converter.

In an exemplary embodiment, the determining a corresponding output state by determining whether the high level of the first driving signal overlaps with the high level of the second clock signal, and generating a second control signal for the second switch according to the output state includes: comparing an input voltage of the BUCK-BOOST converter with the reference voltage to obtain a comparison result; determining the output state according to the comparison result, the first driving signal and the second clock signal; and generating the second control signal for the second switch according to the first driving signal and the output state.

In an exemplary embodiment, the comparing an input voltage of the BUCK-BOOST converter with the reference voltage to obtain a comparison result includes: performing voltage division processing on the input voltage of the BUCK-BOOST converter to obtain a first divided input voltage and a second divided input voltage; comparing the first divided input voltage with the reference voltage to obtain a first comparison result; and comparing the second divided input voltage with the reference voltage to obtain a second comparison result.

In an embodiment, the present application also provides an airbag chip, and the chip may include the control circuit for the BUCK-BOOST converter as shown in Fig. 2 or Fig. 3. Specifically, the chip can be applied to a 48V automotive electrical system, thereby achieving a wide input voltage range, high conversion efficiency, and excellent dynamic performance.

It should be understood that although the steps in the flow diagram involved in each of the above embodiments are shown in sequence as indicated by the arrows, these steps are not necessarily executed in an order indicated by the arrows. Unless otherwise specified herein, there is no strict order restriction on the execution of these steps, and these steps can be executed in other orders. Moreover, at least some of the steps in the flow diagrams involved in each of the above embodiments may include a plurality of steps or a plurality of stages. These steps or stages are not necessarily completed at the same moment, but can be executed at different moments. The execution order of these steps or stages is not necessarily sequential either, but can be executed in turns or alternately with at least some parts of other steps, or steps or stages within other steps.

Those skilled in the art can understand that all or part of the processes in the methods of the above embodiments can be implemented by instructing relevant hardware through a computer program. The computer program can be stored in a non-volatile computer-readable storage medium. When the computer program is executed, it may include the processes of the embodiments of each of the above methods. Any reference to a memory, database, or other medium used in each embodiment provided in the present application may include at least one of a non-volatile memory and a volatile memory. The non-volatile memory may include a read-only memory (ROM), a magnetic tape, a floppy disk, a flash memory, optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache memory, etc. By way of illustration and not limitation, the RAM can be in various forms, such as a static random access memory (SRAM) or a dynamic random access memory (DRAM), etc. The databases involved in each embodiment provided in the present application may include at least one of a relational database and a non-relational database. The non-relational database may include, but are not limited to, a distributed database based on blockchain. The processor involved in each embodiment provided in the present application may include, but are not limited to, a general-purpose processor, a central processing unit, a graphics processor, a digital signal processor, a programmable logic device, a data processing logic device based on quantum computing, an artificial intelligence (AI) processor, etc.

Various technical features of the above embodiments can be combined arbitrarily. To make the description concise, all possible combinations of the various technical features in the above embodiments are not described. However, as long as there is no contradiction in the combination of these technical features, it should be considered as the scope recorded in the present application.

The above embodiments merely express several embodiments of the present application. The descriptions are relatively specific and detailed, but they should not be construed as limitations on the scope of the present application. It should be noted that, for those skilled in the art, several modifications and improvements can be made without departing from the concept of the present application, and these modifications and improvements all fall within the protection scope of the present application. Therefore, the protection scope of the present application shall be subject to the appended claims.

## Claims

1. A control circuit for a BUCK-BOOST converter, comprising:
a voltage divider module configured to perform voltage division processing on an output voltage of the BUCK-BOOST converter to obtain a divided voltage;
an error amplifier configured to compare the divided voltage with a reference voltage and then amplify the difference between the divided voltage and the reference voltage to obtain a voltage error signal;
a current sampling compensation module configured to obtain an inductor current sampling signal of the BUCK-BOOST converter and perform slope compensation on the inductor current sampling signal to obtain a compensation signal;
a first comparator configured to compare the compensation signal with the voltage error signal, and generate a control signal in a case that the compensation signal is determined to match the voltage error signal; and
a mode control module configured to control on-off states of a first switch and a second switch in the BUCK-BOOST converter through the control signal to control an operating mode of the BUCK-BOOST converter.

2. The control circuit according to claim 1, wherein the mode control module comprises:
a first trigger configured to output a first driving signal according to a first clock signal and a logical processing result of the control signal and a current-limiting output signal;
a logic unit configured to perform logical processing on the first driving signal and output a second driving signal;
a first driving unit configured to generate a first control signal for the first switch according to the second driving signal to control the on-off states of the first switch; and
a mode switching unit configured to determine a corresponding output state by determining whether a high level of the first driving signal overlaps with a high level of a second clock signal, and generate a second control signal for the second switch according to the output state to control the on-off states of the second switch.

3. The control circuit according to claim 2, wherein the mode switching unit comprises:
a comparator unit configured to compare an input voltage of the BUCK-BOOST converter with the reference voltage to obtain a comparison result;
a second trigger configured to determine the output state according to the comparison result, the first driving signal and the second clock signal; and
a second driving unit configured to generate the second control signal for the second switch according to the first driving signal and the output state.

4. The control circuit according to claim 3, wherein the comparator unit comprises:
a voltage divider sub-circuit configured to perform voltage division processing on the input voltage of the BUCK-BOOST converter to obtain a first divided input voltage and a second divided input voltage;
a second comparator configured to compare the first divided input voltage with the reference voltage to obtain a first comparison result; and
a third comparator configured to compare the second divided input voltage with the reference voltage to obtain a second comparison result.

5. The control circuit according to any one of claims 2 to 4, wherein the mode control module is further configured to:
when the input voltage of the BUCK-BOOST converter is greater than the output voltage multiplied by a first set multiple, control the first switch to turn on to charge an inductor of the BUCK-BOOST converter to increase the compensation signal; when the compensation signal is equal to the voltage error signal, generate a high-level pulse by the control signal to control the first switch to turn off until the first switch is turned on again in the next clock period; and control the second switch to turn off, such that the BUCK-BOOST converter operates in a buck mode; and
when the input voltage of the BUCK-BOOST converter is less than the output voltage multiplied by a second set multiple, control the second switch to turn off based on the first driving signal, such that the BUCK-BOOST converter operates in a boost mode.

6. The control circuit according to any one of claims 2 to 4, wherein the mode control module is further configured to:
when the input voltage of the BUCK-BOOST converter is less than or equal to the output voltage multiplied by a first set multiple and greater than or equal to the output voltage multiplied by a second set multiple, control the first switch to turn on and control the second switch to turn off at an initial moment, such that the BUCK-BOOST converter operates in a buck mode;
at a moment when the high level of the first driving signal overlaps with the high level of the second clock signal, control the second switch to turn on, such that the BUCK-BOOST converter operates in a boost mode; and
when the control signal generates a high-level pulse, control the first switch to turn off and control the second switch to turn off until the first switch and the second switch are turned on again in the next clock period, thereby realizing a bidirectional buck-boost mode of the BUCK-BOOST converter.

7. The control circuit according to any one of claims 2 to 4, wherein a period of the second clock signal is the same as a period of the first clock signal, and the high level of the second clock signal is delayed relative to a high level of the first clock signal.

8. A control method for a BUCK-BOOST converter, comprising:
performing voltage division processing on an output voltage of the BUCK-BOOST converter to obtain a divided voltage;
comparing the divided voltage with a reference voltage and then amplifying the difference between the divided voltage and the reference voltage to obtain a voltage error signal;
obtaining an inductor current sampling signal of the BUCK-BOOST converter and performing slope compensation on the inductor current sampling signal to obtain a compensation signal;
comparing the compensation signal with the voltage error signal, and generating a control signal in a case that the compensation signal is determined to match the voltage error signal; and
controlling on-off states of a first switch and a second switch in the BUCK-BOOST converter through the control signal to control an operating mode of the BUCK-BOOST converter.

9. The method according to claim 8, wherein the controlling on-off states of a first switch and a second switch in the BUCK-BOOST converter through the control signal to control an operating mode of the BUCK-BOOST converter comprises:
obtaining a first driving signal according to a first clock signal and a logical processing result of the control signal and a current-limiting output signal;
performing logical processing on the first driving signal to obtain a second driving signal, and generating a first control signal for the first switch according to the second driving signal; and
determining a corresponding output state by determining whether a high level of the first driving signal overlaps with a high level of the second clock signal, and generating a second control signal for the second switch according to the output state to control the operating mode of the BUCK-BOOST converter.

10. An airbag chip, comprising the control circuit for the BUCK-BOOST converter according to any one of claims 1 to 7.

## Amended claims

### Amended claims in accordance with Rule 137(2) EPC.

1. A control circuit for a BUCK-BOOST converter, comprising:
a voltage divider module configured to perform voltage division processing on an output voltage of the BUCK-BOOST converter to obtain a divided voltage;
an error amplifier configured to compare the divided voltage with a reference voltage and then amplify the difference between the divided voltage and the reference voltage to obtain a voltage error signal;
a current sampling compensation module configured to obtain an inductor current sampling signal of the BUCK-BOOST converter and perform slope compensation on the inductor current sampling signal to obtain a compensation signal;
a first comparator configured to compare the compensation signal with the voltage error signal, and generate a control signal in a case that the compensation signal is determined to match the voltage error signal; and
a mode control module configured to control on-off states of a first switch (Q1) and a second switch (Q2) in the BUCK-BOOST converter through the control signal to control an operating mode of the BUCK-BOOST converter,
wherein the mode control module comprises:
a first flip-flop configured to output a first driving signal according to a first clock signal and a logical processing result of the control signal and a current-limiting output signal;
a logic unit configured to perform logical processing on the first driving signal and output a second driving signal;
a first driving unit configured to generate a first control signal for the first switch according to the second driving signal to control the on-off states of the first switch; and
a mode switching unit configured to determine a corresponding output state by determining whether a high level of the first driving signal overlaps with a high level of a second clock signal, and generate a second control signal for the second switch according to the output state to control the on-off states of the second switch,
wherein the mode switching unit comprises:
a comparator unit configured to compare an input voltage of the BUCK-BOOST converter with the reference voltage to obtain a comparison result;
a second flip-flop configured to determine the output state according to the comparison result, the first driving signal and the second clock signal; and
a second driving unit configured to generate the second control signal for the second switch according to the first driving signal and the output state.

2. The control circuit according to claim 1, wherein the comparator unit comprises:
a voltage divider sub-circuit configured to perform voltage division processing on the input voltage of the BUCK-BOOST converter to obtain a first divided input voltage and a second divided input voltage;
a second comparator configured to compare the first divided input voltage with the reference voltage to obtain a first comparison result; and
a third comparator configured to compare the second divided input voltage with the reference voltage to obtain a second comparison result.

3. The control circuit according to claim 1 or claim 2, wherein the mode control module is further configured to:
when the input voltage of the BUCK-BOOST converter is greater than the output voltage multiplied by a first set multiple, control the first switch to turn on to charge an inductor of the BUCK-BOOST converter to increase the compensation signal; when the compensation signal is equal to the voltage error signal, generate a high-level pulse by the control signal to control the first switch to turn off until the first switch is turned on again in the next clock period; and control the second switch to turn off, such that the BUCK-BOOST converter operates in a buck mode; and
when the input voltage of the BUCK-BOOST converter is less than the output voltage multiplied by a second set multiple, control the second switch to turn off based on the first driving signal, such that the BUCK-BOOST converter operates in a boost mode.

4. The control circuit according to claim 1 or claim 2, wherein the mode control module is further configured to:
when the input voltage of the BUCK-BOOST converter is less than or equal to the output voltage multiplied by a first set multiple and greater than or equal to the output voltage multiplied by a second set multiple, control the first switch to turn on and control the second switch to turn off at an initial moment, such that the BUCK-BOOST converter operates in a buck mode;
at a moment when the high level of the first driving signal overlaps with the high level of the second clock signal, control the second switch to turn on, such that the BUCK-BOOST converter operates in a boost mode; and
when the control signal generates a high-level pulse, control the first switch to turn off and control the second switch to turn off until the first switch and the second switch are turned on again in the next clock period, thereby realizing a bidirectional buck-boost mode of the BUCK-BOOST converter.

5. The control circuit according to claim 1 or claim 2, wherein a period of the second clock signal is the same as a period of the first clock signal, and the high level of the second clock signal is delayed relative to a high level of the first clock signal.

6. A control method for a BUCK-BOOST converter, comprising:
performing (502) voltage division processing on an output voltage of the BUCK-BOOST converter to obtain a divided voltage;
comparing (504) the divided voltage with a reference voltage and then amplifying the difference between the divided voltage and the reference voltage to obtain a voltage error signal;
obtaining (506) an inductor current sampling signal of the BUCK-BOOST converter and performing slope compensation on the inductor current sampling signal to obtain a compensation signal;
comparing (508) the compensation signal with the voltage error signal, and generating a control signal in a case that the compensation signal is determined to match the voltage error signal; and
controlling (510) on-off states of a first switch (Q1) and a second switch (Q2) in the BUCK-BOOST converter through the control signal to control an operating mode of the BUCK-BOOST converter,
wherein the controlling (510) on-off states of a first switch (Q1) and a second switch (Q2) in the BUCK-BOOST converter through the control signal to control an operating mode of the BUCK-BOOST converter comprises:
obtaining a first driving signal according to a first clock signal and a logical processing result of the control signal and a current-limiting output signal;
performing logical processing on the first driving signal to obtain a second driving signal, and generating a first control signal for the first switch according to the second driving signal; and
determining a corresponding output state by determining whether a high level of the first driving signal overlaps with a high level of the second clock signal, and generating a second control signal for the second switch according to the output state to control the operating mode of the BUCK-BOOST converter,
wherein the determining a corresponding output state by determining whether a high level of the first driving signal overlaps with a high level of the second clock signal, and generating a second control signal for the second switch according to the output state comprises:
comparing an input voltage of the BUCK-BOOST converter with the reference voltage to obtain a comparison result;
determining the output state according to the comparison result, the first driving signal and the second clock signal; and
generating the second control signal for the second switch according to the first driving signal and the output state.

7. An airbag chip, comprising the control circuit for the BUCK-BOOST converter according to any one of claims 1 to 5.
